# EUROPEAN PATENT APPLICATION

(11) **EP 4 664 535 A1**
(43) Date of publication of application: **17.12.2025**
(21) Application number: 24901029.9
(22) Date of filing: 03.12.2024
(51) Int. Cl.: H01M 4/04, H01M 10/04, B30B 3/00, B30B 3/04, B30B 15/34

(54) **ROLL PRESS APPARATUS FOR MANUFACTURING SECONDARY BATTERY**

(30) Priority: 05.12.2023 KR 20230173935
(71) Applicant: LG Energy Solution, Ltd., Seoul 07335 (KR)
(72) Inventor: PARK, Jin Hui, Daejeon 34122 (KR); MOON, Hong Seok, Daejeon 34122 (KR); SEOL, Jeong Soo, Daejeon 34122 (KR); YOON, Tae Gyun, Daejeon 34122 (KR); PARK, Bum Yong, Daejeon 34122 (KR)
(74) Representative: Plasseraud IP
(86) International application number: PCT/KR2024/019606
(87) International publication number: WO 2025/121843

(57) **Abstract**

Disclosed herein is a roll press device for performing hot rolling on an electrode coated with electrode active material, wherein, in one example, a pre-heater is disposed upstream of a rolling unit that performs rolling on an electrode transferred in a roll-to-roll manner, and the pre-heater irradiates an infrared laser along a width direction of the electrode surface to heat it as radiant heat.

## Description

### [Technical Field]

The present disclosure relates to a roll press device for performing hot rolling on electrodes for secondary batteries.

This application claims the benefit of priority from Korean Patent Application No. 10-2023-0173935, filed on December 05, 2023, and all of the contents of the Korean Patent Application are incorporated by reference into this disclosure.

### [Background]

With the increasing technological development and demand for mobile devices, the demand for secondary batteries as energy sources is rapidly increasing, and accordingly, extensive research is being conducted on secondary batteries that can meet various requirements.

Representatively, in terms of battery shape, there is high demand for prismatic secondary batteries and pouch-type secondary batteries that can be applied to products such as mobile phones due to their thin thickness, and in terms of materials, there is high demand for lithium secondary batteries such as lithium-ion batteries and lithium-ion polymer batteries, which have advantages of high energy density, discharge voltage, and output stability.

Such secondary batteries are manufactured by coating electrode mixture containing active materials, conductive materials, and binders on electrode sheets, then through rolling process, drying process, slitting process, and notching process to produce electrodes which are stacked with separators interposed between them to form an electrode assembly, which is then housed in a battery case, injected with electrolyte, and sealed.

Many of the processes performed during the manufacturing of these secondary batteries are conducted in a roll-to-roll manner. In other words, processes such as rolling and drying are carried out by unwinding the electrode roll using an unwinder while simultaneously rewinding the processed electrode roll with a rewinder on the opposite side.

In the rolling process, a roll press device that applies pressure by traveling electrodes between two rolls is used. Hot rolling by the roll press device increases a temperature of the electrode to lower the surface hardness, thereby implementing high rolling density with small reduction force. The current electrode heating method directly heats the roll using electric heating rods, and the roll applies conductive heat to the electrode surface.

However, the conductive heating method has low heating response speed, and even when the power supply to the heating rod is cut off, residual heat remains, making the cooling speed slow, and due to the time required for heat conduction to the electrode, it was difficult to increase the traveling speed of the electrode roll. Increasing the roll speed can reduce takt time, but the conductive heating method shows limitations in such process improvements.

### [Summary]

### [Technical Problem]

The object of the present disclosure is to provide a roll press device that utilizes radiant heat to improve the heating and cooling responsiveness of an electrode surface and selectively heats the electrode active material, thereby avoiding quality problems such as uncoated part wrinkles caused by foil expansion.

However, the technical problem to be solved by the present disclosure is not limited to the above-described problem, and other problems not mentioned can be clearly understood by a person skilled in the art from the description of the disclosure described below.

### [Technical Solution]

The present disclosure relates to a roll press device for performing hot rolling on an electrode coated with electrode active material, wherein, in one example, a pre-heater is disposed upstream of a rolling unit that performs rolling on an electrode transferred in a roll-to-roll manner, and the pre-heater irradiates an infrared laser along a width direction of a surface of the electrode to heat the surface of the electrode as radiant heat.

In one embodiment of the present disclosure, a wavelength of the infrared laser irradiated by the pre-heater has an absorption rate of 10% or less for copper or aluminum, which are materials of the electrode, while simultaneously having an absorption rate of 70% or more for the electrode active material.

For example, the wavelength of the infrared laser may be within a range of 1,064±100nm.

In addition, an output of the infrared laser may be controlled to maintain a temperature of the electrode active material within a range of 80±5°C.

In one embodiment, the output of the infrared laser may be controlled as output per unit time that varies according to the transfer speed of the electrode.

In addition, the pre-heater may irradiate the infrared laser across a transfer direction of the electrode transferred in a roll-to-roll manner in a line beam or square beam method.

Meanwhile, the present disclosure provides a hot rolling method of electrodes for secondary batteries, in which an electrode coated with electrode active material is transferred in a roll-to-roll manner, and a pre-heater disposed upstream of a rolling unit that performs rolling on the electrode irradiates an infrared laser along a width direction of a surface of the electrode to heat the surface of the electrode as radiant heat.

Preferably, a wavelength of the infrared laser irradiated by the pre-heater may be in a range that has an absorption rate of 10% or less for copper or aluminum, which are materials of the electrode, while simultaneously having an absorption rate of 70% or more for the electrode active material.

For example, the wavelength of the infrared laser may be within a range of 1,064±100nm.

In addition, the output of the infrared laser may be controlled as output per unit time that varies according to a transfer speed of the electrode, thereby the temperature of the electrode active material is maintained within a range of 80±5°C.

### [Advantageous Effects]

According to the roll press device of the present disclosure having the aforementioned configuration, the electrode surface is heated by the infrared laser irradiated by the pre-heater. In other words, the electrode is heated in the form of radiant heat transfer rather than conductive heat transfer.

Therefore, according to the roll press device of the present disclosure, the heating response speed is high due to radiant heat, the pre-heater is cooled immediately without residual heat when the power supply is cut off, and it becomes easier to increase the traveling speed of the electrode roll due to fast heat transfer.

In addition, since radiant heat selectively heats the electrode active material rather than the electrode which is a metal material, problems such as wrinkle occurrence caused by expansion of the uncoated part where there is no electrode active material do not occur.

However, the technical effects that can be obtained through the present disclosure are not limited to the above-described effects, and other effects not mentioned can be clearly understood by a person skilled in the art from the description of the disclosure described below.

### [Brief Description of the Drawings]

Because the following drawings attached to the present specification illustrate exemplary embodiments of the present disclosure and serve to facilitate understanding of the technical idea of the present disclosure together with the detailed description of the disclosure described below, the present disclosure should not be limitedly interpreted on the basis of the drawings.
FIG. 1 is a schematic diagram illustrating a roll press device according to an embodiment of the present disclosure.
FIG. 2 is a graph diagram showing the absorption rate by infrared wavelength for copper and aluminum.
FIG. 3 is a schematic diagram illustrating the infrared absorption pattern in an electrode coated with electrode active material.
FIG. 4 is a diagram illustrating an example of irradiating an infrared laser on an electrode surface coated with electrode active material.
FIG. 5 is a flowchart of a hot rolling method for an electrode for a secondary battery.

### [Best Mode]

The present disclosure may have various modifications and various embodiments, and thus specific embodiments thereof will be described in detail below.

However, it should be understood that the present disclosure is not limited to the specific embodiments, and includes all modifications, equivalents, or alternatives within the spirit and technical scope of the present disclosure.

The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.

In addition, in the present disclosure, when a part of a layer, film, region, plate, or the like is disposed "on" another part, this includes not only a case in which one part is disposed "directly on" another part, but a case in which still another part is interposed therebetween. In contrast, when a part of a layer, film, region, plate, or the like is disposed "under" another part, this includes not only a case in which one part is disposed "directly under" another part, but a case in which still another part is interposed therebetween. In addition, in the present application, "on" may include not only a case of being disposed on an upper portion but also a case of being disposed on a lower portion.

The present disclosure relates to a roll press device for performing hot rolling on an electrode coated with electrode active material, wherein, in one example, a pre-heater is disposed upstream of a rolling unit that performs rolling on an electrode transferred in a roll-to-roll manner, and the pre-heater irradiates an infrared laser along a width direction of a surface of the electrode to heat the surface of the electrode as radiant heat.

According to the roll press device of the present disclosure having the above configuration, the electrode surface is heated by the infrared laser irradiated by the pre-heater. In other words, the electrode is heated in the form of radiant heat transfer rather than conductive heat transfer.

Therefore, according to the roll press device of the present disclosure, the heating response speed is high due to radiant heat, the pre-heater is cooled immediately without residual heat when the power supply is cut off, and it becomes easier to increase the traveling speed of the electrode roll by rapid heat transfer.

### [Detailed Description]

Hereinafter, specific embodiments of a roll press device 10 according to the present disclosure will be described in detail with reference to the accompanying drawings. For reference, the directions of front, back, up, down, left, and right used in the following description to designate relative positions are for the purpose of understanding the disclosure and refer to the directions shown in the drawings unless otherwise specified.

### [first embodiment]

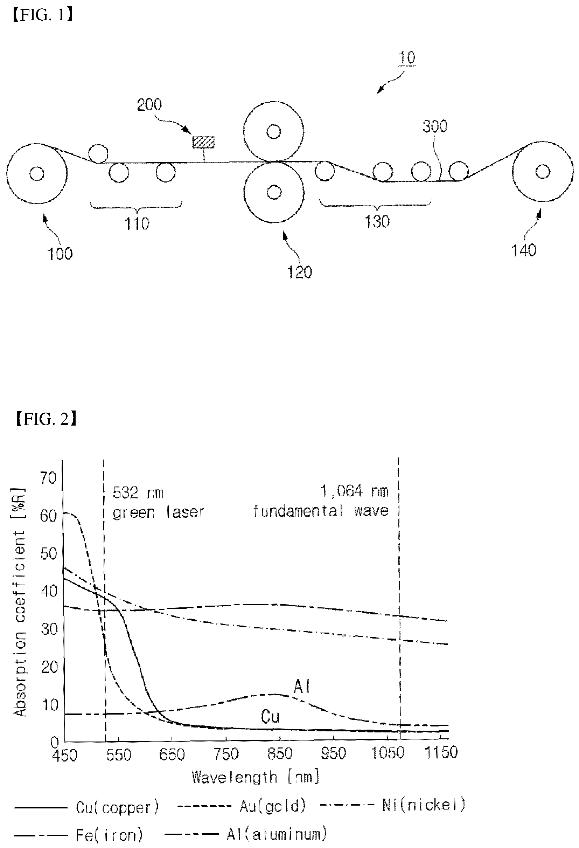

FIG. 1 is a schematic diagram illustrating a roll press device 10 according to an embodiment of the present disclosure.

The roll press device 10 refers to equipment that performs a rolling process to increase the density of the active material 310 while making the thickness of the active material 310 uniform by pressurizing the surface of the electrode 300 coated with electrode active material 310. For the rolling process conducted in a roll-to-roll manner, the electrode 300 coated with electrode active material 310 is wound on a bobbin, and the bobbin with the wound electrode 300 is mounted on an unwinder 100. The electrode 300 mounted on the unwinder 100 is unwound, and the unwound electrode 300 is rewound at the downstream rewinder 140 to return to roll form. The electrode 300 transferred in a roll-to-roll manner is subjected to appropriate tension to prevent various problems such as sagging or waviness of the electrode 300.

A rolling unit 120 is disposed between the unwinder 100 and the rewinder 140. The rolling unit 120 applies a set pressure as the electrode 300 passes between a pair of rotating rollers. The active material 310 of the electrode 300 subjected to pressure increases in density while achieving uniform thickness. In addition, the roll press device 10 includes an infeed 110 and an outfeed 130. The infeed 110 is disposed between the unwinder 100 and the rolling unit 120, and the outfeed 130 is disposed between the rolling unit 120 and the rewinder 140. The infeed 110 and outfeed 130 adjust the tension applied to the electrode 300 or align the electrode 300 to ensure smooth transfer. For example, weaving phenomena where the electrode 300 travels diagonally can be corrected by the infeed 110 and outfeed 130.

The roll press device 10 of the present disclosure includes a pre-heater 200 for performing hot rolling. Hot rolling increases the temperature of the electrode 300 to lower its surface hardness, thereby achieving high rolling density with small reduction force. Therefore, the pre-heater 200 is disposed upstream of the rolling unit 120 that performs rolling on the electrode 300 transferred in a roll-to-roll manner. Hot rolling is performed at the rolling unit 120 as the electrode 300 is appropriately heated by the pre-heater 200.

In the roll press device 10 of the present disclosure, the pre-heater 200 irradiates an infrared laser along the width direction of the transferred electrode 300 surface to heat it as radiant heat. The heating of the electrode 300 by infrared radiation is selectively absorbed by the electrode 300, which is a metal material, and the electrode active material 310 coated on it. In other words, infrared radiation shows a significant difference in absorption rate between the electrode 300 and the electrode active material 310.

FIG. 2 is a graph diagram showing the absorption rate by infrared wavelength for copper and aluminum. Copper and aluminum are representative materials for electrodes 300 (positive electrode and negative electrode), and as shown in FIG. 2, copper or aluminum has an absorption rate of at least 10% or less for infrared light. In contrast, the electrode active material 310, which is close to black, has an absorption rate of at least 70% or more for infrared light. Therefore, when irradiating an infrared laser of the same output along the width direction of the electrode 300 surface, the temperature of the electrode active material 310 rises significantly more than the temperature of the electrode 300 due to the significant difference in absorption rates.

For example, the wavelength of the infrared laser may be within the range of 1,064±100nm. In this wavelength range, the absorption rate of copper is less than about 1% and the absorption rate of aluminum is less than about 5%. In contrast, the absorption rate of the electrode active material 310 reaches approximately 80% or more. That is, at the reference wavelength of 1,064nm, the electrode active material 310 absorbs most of the infrared radiation, while copper and aluminum reflect almost all of the infrared radiation.

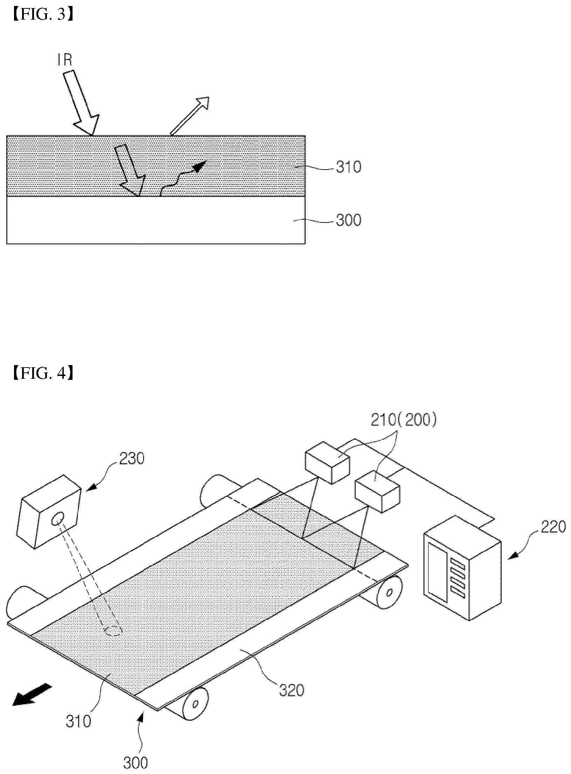

FIG. 3 is a schematic diagram illustrating the infrared absorption pattern in an electrode 300 coated with electrode active material 310. The electrode active material 310 is coated on the electrode 300 surface, and the laser irradiator 210 equipped in the pre-heater 200 irradiates an infrared laser. The infrared laser is first irradiated on a surface of the electrode active material 310, and accordingly, some infrared light is reflected from the surface of the electrode active material 310, but most of the infrared energy is absorbed by the electrode active material 310. Also, some infrared radiation reaches the electrode 300 surface, but most of it is reflected from the electrode 300 surface and reabsorbed by the electrode active material 310.

When heating the electrode 300 with radiant heat from the infrared laser in this way, most of the energy is absorbed by the electrode active material 310 and only a very small amount is absorbed by the electrode 300, which is copper or aluminum. Heating by radiant heat responds quickly, energy transfer is immediately cut off when infrared irradiation is stopped, and selective heating by infrared radiation does not significantly increase the temperature of the electrode 300. Therefore, since the temperature rise of the electrode 300 where no electrode active material 310 is coated is significantly lower than in the case of applying conventional conductive heat, problems such as wrinkles in the uncoated part 320 due to electrode 300 expansion are also simultaneously solved.

FIG. 4 is a diagram illustrating an example of irradiating an infrared laser on an electrode 300 surface coated with electrode active material 310. In the embodiment exemplarily shown in FIG. 4, the pre-heater 200 is equipped with two laser irradiators 210. Each laser irradiator 210 irradiates infrared in the 1,064±100nm wavelength range and can irradiate the infrared laser across the transfer direction of the electrode 300 transferred in a roll-to-roll manner in a line beam or square beam method.

Moreover, the operation of the laser irradiator 210 is controlled by the pre-heater controller 220. The pre-heater controller 220 can also adjust the output of the laser light. The heating temperature to raise the temperature of the electrode 300 can be adjusted by controlling the output of the infrared laser. For example, the output of the infrared laser can be controlled to an output that keeps the temperature of the electrode active material 310 within the range of 80±5°C.

For feedback control, a temperature sensor 230 for measuring the temperature of the electrode active material 310 may be disposed downstream of the pre-heater 200. The temperature sensor 230 can, for example, measure the temperature of the electrode active material 310 in a non-contact manner. Based on the measured temperature of the electrode active material 310, the output of the infrared laser can be variably adjusted.

Also, since the pre-heater 200 heats the electrode 300 transferred in a roll-to-roll manner, it is preferable that the output of the infrared laser varies according to the transfer speed of the electrode 300. In other words, since the time for radiant heat transfer differs according to the transfer speed, it is appropriate to consider the transfer speed of the electrode 300 together when controlling the laser output. Therefore, the output of the infrared laser can be controlled as output per unit time that varies according to the transfer speed of the electrode 300.

Accordingly, as the transfer speed of the electrode 300 increases, the infrared laser is irradiated with a higher output per unit time, allowing the temperature of the electrode active material 310 to be increased to the required level, for example, within the range of 80±5°C. This is made possible by the high responsiveness of radiant heat and the immediate output control of the laser irradiator 210, which, expressed differently, means that the roll-to-roll transfer speed can be increased within the permitted range of the output per unit time of the infrared laser. Therefore, the roll press device 10 of the present disclosure is advantageous for reducing takt time by increasing the traveling speed of the roll.

### [second embodiment]

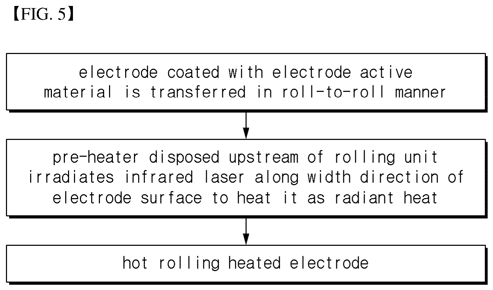

Meanwhile, the present disclosure provides a hot rolling method for electrodes for secondary batteries, in which an electrode 300 coated with electrode active material 310 is transferred in a roll-to-roll manner, a pre-heater 200 disposed upstream of a rolling unit 120 that performs rolling on the electrode 300 irradiates an infrared laser along a width direction of the electrode 300 surface to heat it as radiant heat. The main configuration of such hot rolling method for electrodes for secondary batteries is summarized in the flowchart of FIG. 5.

As described in the first embodiment, the wavelength of the infrared laser irradiated by the pre-heater 200 may preferably be in a range that has an absorption rate of at least 10% or less for copper or aluminum, which are the materials of the electrode 300, while simultaneously having an absorption rate of at least 70% or more for the electrode active material 310.

For example, the wavelength of the infrared laser irradiated by the pre-heater 200 may be within the range of 1,064±100nm.

In addition, the output of the infrared laser may be controlled as output per unit time that varies according to the transfer speed of the electrode 300, so that the temperature of the electrode active material 310 is within the range of 80±5°C. As mentioned above, a temperature sensor 230 for measuring the temperature of the electrode active material 310 may be disposed downstream of the pre-heater 200 for feedback control.

As aforementioned, the present disclosure has been described in more detail through the drawings, embodiments, and the like. However, since the configuration described in the drawings or embodiments, etc. described herein is merely one embodiment of the present disclosure and does not represent the overall technical spirit of the disclosure, it should be understood that the disclosure covers various equivalents, modifications, and substitutions at the time of filing of this application.

### [Description of Reference Numerals]

- 10:: roll press device
- 100:: unwinder
- 110:: infeed
- 120:: rolling unit
- 130:: outfeed
- 140:: rewinder
- 200:: pre-heater
- 210:: laser irradiator
- 220:: pre-heater controller
- 230:: temperature sensor
- 300:: electrode
- 310:: electrode active material
- 320:: uncoated part

## Claims

1. A roll press device for performing hot rolling on an electrode coated with electrode active material, wherein,
a pre-heater is disposed upstream of a rolling unit that performs rolling on an electrode transferred in a roll-to-roll manner, and
wherein the pre-heater irradiates an infrared laser along a width direction of a surface of the electrode to heat the surface of the electrode as radiant heat.

2. The roll press device of claim 1, wherein a wavelength of the infrared laser irradiated by the pre-heater has an absorption rate of 10% or less for copper or aluminum, which are materials of the electrode, while simultaneously having an absorption rate of 70% or more for the electrode active material.

3. The roll press device of claim 2, wherein the wavelength of the infrared laser is within a range of 1,064±100nm.

4. The roll press device of claim 3, wherein an output of the infrared laser is controlled to maintain a temperature of the electrode active material within a range of 80±5°C.

5. The roll press device of claim 4, wherein the output of the infrared laser is controlled as output per unit time that varies according to a transfer speed of the electrode.

6. The roll press device of claim 1, wherein the pre-heater irradiates the infrared laser across a transfer direction of the electrode transferred in a roll-to-roll manner in a line beam or square beam method.

7. A hot rolling method for electrodes for secondary batteries, wherein an electrode coated with electrode active material is transferred in a roll-to-roll manner,
wherein a pre-heater disposed upstream of a rolling unit that performs rolling on the electrode irradiates an infrared laser along a width direction of a surface of the electrode to heat the surface of the electrode as radiant heat.

8. The hot rolling method for electrodes for secondary batteries of claim 7, wherein a wavelength of the infrared laser irradiated by the pre-heater is in a range that has an absorption rate of 10% or less for copper or aluminum, which are materials of the electrode, while simultaneously having an absorption rate of 70% or more for the electrode active material.

9. The hot rolling method for electrodes for secondary batteries of claim 8, wherein the wavelength of the infrared laser is within a range of 1,064±100nm.

10. The hot rolling method for electrodes for secondary batteries of claim 9, wherein the output of the infrared laser is controlled as output per unit time that varies according to a transfer speed of the electrode, thereby the temperature of the electrode active material is maintained within a range of 80±5°C.
